# FASCICULE DE BREVET EUROPEEN

(11) **EP 0 430 741 B1**
(45) Date de publication et mention de la délivrance du brevet: **06.10.1993**
(21) Numéro de dépôt: 90403190.3
(22) Date de dépôt: 09.11.1990
(51) Int. Cl.: B65G 25/10

(54) **Racleur et châssis de raclage ainsi équipé, pour le transfert de produits granuleux ou en poudre**
Kratzer und damit ausgerüsteter Kratzerrahmen zum Fördern von körnigem oder pulverförmigem Gut
Scraper and scraperframe equipped therewith for transfering granular or powdery products

(30) Priorité: 29.11.1989 FR 8915722
(43) Date de publication de la demande: 05.06.1991
(73) Titulaire: GENERALE DE TRAITEMENT DE SURFACE, 94000 Creteil (FR)
(72) Inventeur: Dupuit, Gérard, F-59134 Fourves en Weppes (FR)
(74) Mandataire: Keib, Gérard

(56) Documents cités:
- FR-A- 2 579 571

## Description

La présente invention concerne un racleur destiné à être monté entre deux longerons d'un châssis de raclage à mouvement alternatif.

La présente invention concerne également un châssis de raclage ainsi équipé.

L'invention vise notamment les racleurs et les châssis de raclage utilisés dans des couloirs de récupération de produits de décapage granuleux ou pulvérulents, résultant en particulier du décapage au sable.

Les châssis de raclage sont animés d'un mouvement alternatif dans le plan horizontal mais grâce à la structure particulière des racleurs, ils ne sont actifs que dans un seul sens de leur mouvement pour propulser les produits granuleux ou pulvérulents vers un dispositif de recyclage.

Selon le FR-A- 2 579 571, chaque racleur comprend une armature métallique en forme de peigne soudée au longeron et une lame flexible en élastomère qui est boulonnée entre la traverse supérieure du peigne et un profilé de contre-appui de manière à pouvoir s'appuyer contre une face verticale du peigne.

Dans le sens du mouvement où la matière appuie la lame flexible contre le peigne, la lame flexible propulse la matière. Dans l'autre sens de mouvement, la lame flexible, non soutenue par le peigne, s'échappe en fléchissant vers le haut sans déplacer la matière. Le peigne, dont les dents sont trop espacées pour entraîner la matière, laisse également celle-ci en place.

La structure connue donne satisfaction en ce qui concerne la résistance de la lame flexible au contact avec la matière à propulser. Par contre, la liaison entre l'armature et la lame flexible pose problème. Elle est coûteuse à la fabrication, nécessitant de nombreux perçages et boulonnages, et il arrive qu'elle manque de résistance en service.

Le but de l'invention est de proposer un racleur et un châssis de raclage dans lesquels la fixation entre l'armature et la lame flexible est plus robuste et plus économique à réaliser.

Suivant l'invention, le racleur destiné à être monté entre deux longerons d'un châssis de raclage à mouvement alternatif, comprenant une armature en tôle métallique du type peigne à dents dirigées vers le bas, et une lame racleuse flexible fixée contre une face d'une traverse de l'armature, au-dessus d'une extrémité des dents (17) qui est raccordée à la traverse, la lame racleuse flexible s'étendant vers le bas en couvrant lesdites dents, est caractérisé en ce que la lame flexible est collée à ladite face de l'armature.

Ainsi, selon l'invention, la liaison peut être réalisée sur toute la longueur du racleur par collage entre une face de l'armature et la lame. La fixation, au lieu d'être ponctuelle est devenue une liaison de surface, ce qui évite les concentrations de contraintes dans la lame flexible et confère à celle-ci une bien meilleure robustesse au voisinage de la liaison. De plus, l'invention rend inutiles les opérations de perçage et de boulonnage pour la fixation de la lame flexible. L'invention rend également inutile le profilé de contre-appui utilisé dans l'art antérieur contre la face de la lame flexible opposée au peigne. De plus, la liaison selon l'invention est particulièrement facile à réaliser. L'encombrement en hauteur de la fixation par collage est réduit. Ceci est très avantageux car permettant d'allonger les dents du peigne, ce qui réduit les frottements lors du trajet retour du racleur et peut permettre d'éviter la destruction du racleur en cas de présence d'un corps étranger rigide dans le couloir.

Les conditions de fonctionnement des râcleurs du genre visé par l'invention sont très difficiles (flexions alternées, milieux agressifs mécaniquement et/ou chimiquement, contraintes occasionnelles d'arrachement etc), et c'est la raison pour laquelle on avait jusqu'à présent préféré une fixation mécanique. Les meilleurs résultats fournis par la solution plus économique selon l'invention sont donc très surprenants.

De préférence, le long d'un bord opposé aux dents, la traverse comporte une aile raidisseuse formant un angle par rapport à la face à laquelle la lame est collée.

Selon un second aspect de l'invention, le châssis de raclage, comprenant deux longerons parallèles entre lesquels s'étendent transversalement des racleurs conformes au premier aspect, est caractérisé en ce que les longerons comportent pour chaque racleur une console sur laquelle repose l'aile raidisseuse, et en ce qu'un boulon traverse la console et l'aile raidisseuse pour fixer le racleur au longeur.

On profite de l'aile raidisseuse de l'armature pour réaliser une liaison vissée entre les racleurs et les longerons. Ceci permet de remplacer facilement un racleur, notmment lorsque celui-ci a été déformé en raison de la présente anormale d'un corps lourd dans le couloir.

D'autres particularités et avantages de l'invention ressortiront encore de la desciption ci-après.

Aux dessins annexés, donnés à titre d'exemples non limitatifs:
- la figure 1 est une vue schématique en perspective, avec coupe et arrachement, montrant un châssis de raclage selon l'invention monté dans un couloir de récupération de produits granuleux ou pulvérulents;
- la figure 2 est une vue en coupe transversale du dispositif selon la figure 1, vue depuis l'avant de la figure 1, avec arrachements;
- les figures 3 et 4 sont deux vues schématiques en coupe longitudinale du dispositif selon la figure 1;
- la figure 5 est une vue en coupe selon la ligne V-V de la figure 2; et
- la figure 6 est une vue en coupe simplifiée selon la ligne VI-VI de la figure 2 lors du franchissement d'un monticule de matière dans le sens retour.

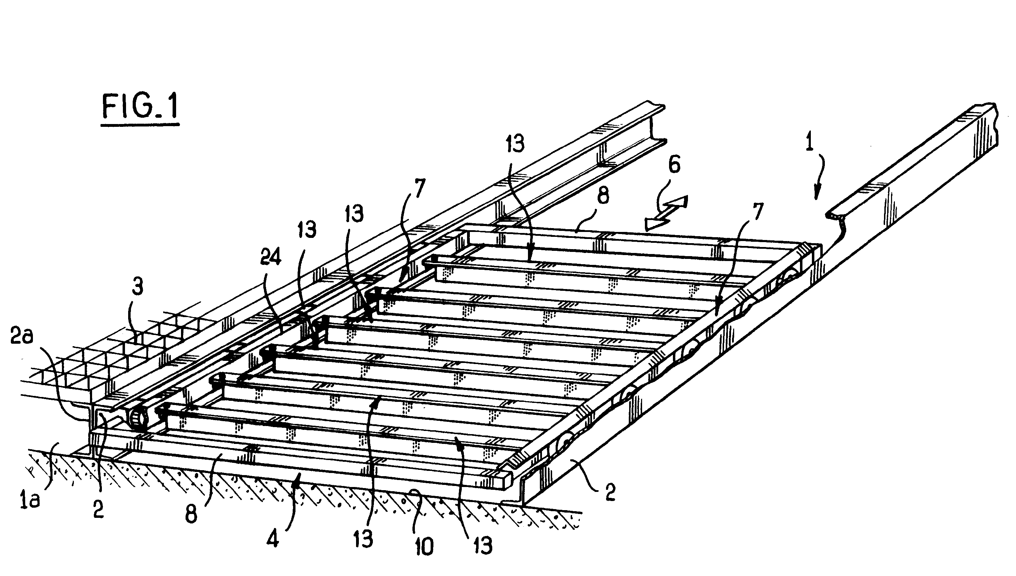

Dans l'exemple représenté à la figure 1, un couloir 1 de récupération de produits granuleux ou pulvérulents provenant du décapage d'une structure métallique par sablage comprend un sol en maçonnerie 10 et deux parois latérales constituées par des profilés en U 2 qui s'ouvrent latéralement l'un vers l'autre. Un profilé 2a accolé dos à dos à l'un des profilés 2 constitue la paroi latérale d'un couloir de récupération adjacent 1a. De tels couloirs de récupération peuvent ainsi couvrir tout le sol d'un local de décapage, des rails du type ferroviaire pouvant toutefois être prévus pour amener les structures à décaper et les évacuer après décapage. Pour permettre la circulation des personnes et leur travail à proximité des structures à décaper, les ailes supérieures des profilés 2 et 2a supportent des caillebotis 3 qui ne sont représentés qu'au-dessus du couloir 1a.

Dans chaque couloir, et en particulier dans le couloir 1, est monté un châssis de raclage 4 entre le sol 10 et le caillebotis 3. Le châssis de raclage 4 est animé d'un mouvement longitudinal alternatif selon la flèche 6 au moyen d'un dispositif moteur non représenté, tel qu'un ou plusieurs vérins. Si la longueur du couloir 1 le justifie, plusieurs châssis 4 peuvent être fixés l'un à la suite de l'autre dans le couloir 1.

Chaque châssis de raclage 4 comprend deux longerons 7 et deux traverses d'extrémité 8 qui forment ensemble un cadre rectangulaire.

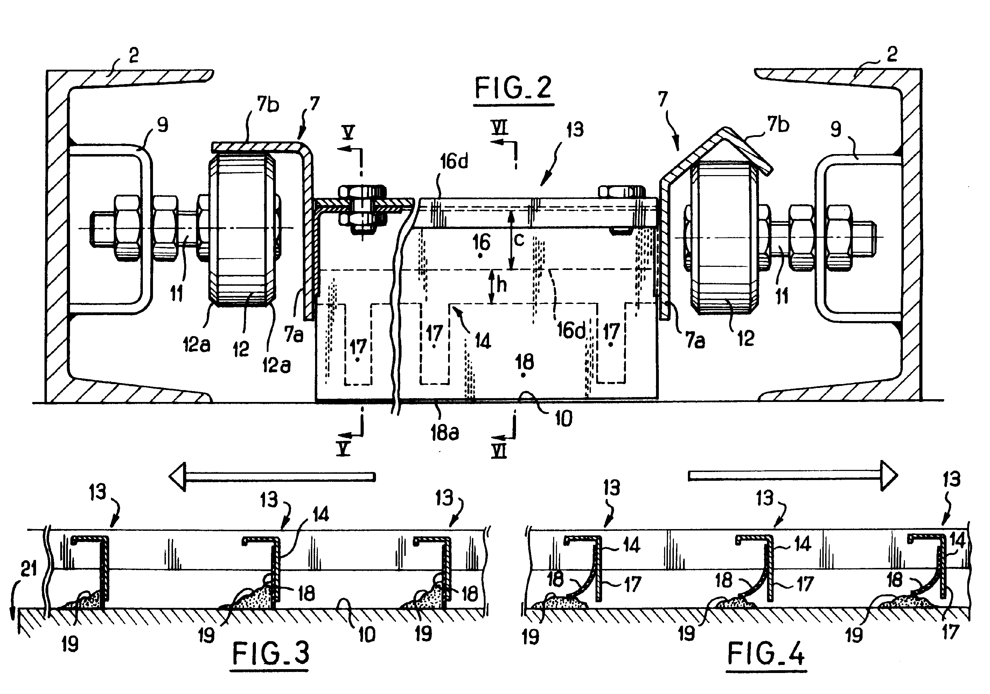

Comme le montre la figure 2, les profilés latéraux 2 portent par l'intermédiaire de montures 9 des arbres horizontaux transversaux 11 sur lesquels des galets 12 sont montés en rotation. Le longeron 7 de gauche a un profil en L, avec une aile 7a dirigée vers le bas et une aile 7b raccordée à angle droit au sommet de l'aile 7a et dirigée vers l'extérieur du cadre. L'aile 7b repose sur le sommet des galets 12 portés par le profilé 2 adjacent.

Le profilé 7 de droite diffère du profilé 7 de gauche en ce que son aile supérieure 7b a un profil en V s'ouvrant vers le bas et repose sur deux bords tronconiques 12a des galets 12 portés par le profilé 2 adjacent. Cette particularité a pour but de positionner latéralement le châssis racleur entre les profilés 2.

Des racleurs 13 s'étendent entre les deux longerons 7, parallèlement aux traverses d'extrémité 8. Les racleurs 13 sont régulièrement espacés entre les deux traverses d'extrémité 8. (Voir figure 1).

Comme le montrent les figures 2 à 4, chaque racleur 13 comprend une armature 14 en tôle en forme de peigne, comprenant une traverse 16 s'étendant de manière continue entre les deux longerons 7, et des dents 17 espacées les unes des autres et s'étendant verticalement vers le bas à partir de la traverse 16 jusqu'à une faible distance non nulle du sol 10 du couloir. Chaque racleur 13 comprend en outre une lame flexible 18 qui s'étend au repos dans un plan sensiblement vertical qui est adjacent au plan vertical contenant les dents 17 et qui est donc transversal à la direction longitudinale des longerons 7, Un bord inférieur 18a de la lame flexible 18 est plus proche du sol 10 que les extrémités libres des dents 17. Une région supérieure de la lame flexible 18 est fixée contre une face 16a de la traverse 16 de l'armature 14. La face 16a est dans le même plan vertical que l'une des faces des dents 17. La lame flexible 18 est rectangulaire et s'étend sur toute la longueur de la traverse 16 de l'armature, c'est-à-dire sur sensiblement toute la distance libre entre les ailes verticales de deux longerons 7.

La hauteur totale de la lame flexible 18 est telle qu'un bord supérieur 18b de la lame flexible est voisine d'un bord supérieur 16b de la face 16a.

Comme le montre la figure 3, quand le châssis de raclage se déplace dans un sens travail dans lequel les lames flexibles 18 sont situées vers l'avant par rapport aux armatures 14 respectivement associées, la matière à propulser plaque les lames flexibles 18 contre les armatures 14 respectives, et la matière à propulser 19 est poussée par les lames 18 vers une trémie 21 dans laquelle le couloir débouche à l'une de ses extrémités.

Au contraire, comme le montre la figure 4, lorsque le châssis de raclage est déplacé dans un sens retour, les lames 18 sont situées en arrière des armatures 14 relativement au sens du mouvement. Après une certaine course de retour, les dents 17 de chaque racleur 13 rencontrent la matière 19 qui a été abandonnée par le racleur situé juste devant relativement au sens du mouvement de retour. Les dents traversent la matière 19 pratiquement sans l'entraîner, compte tenu de l'espacement entre dents et de la distance entre les dents et le sol 10. Les lames 18 situées derrière les dents 17 fléchissent vers le haut et, ainsi, franchissent elles aussi les accumulations de matière 19 sans les entraîner vers l'arrière. Ensuite, le mouvement s'inverse de nouveau, et chaque accumulation de matière 19 est propulsée d'un nouveau pas dans le sens travail vers la trémie 21. En outre, la matière qui est tombée entretemps sur le sol 10 à travers le caillebotis 3 est collectée et vient grossir les accumulations déjà existantes devant chaque racleur 13.

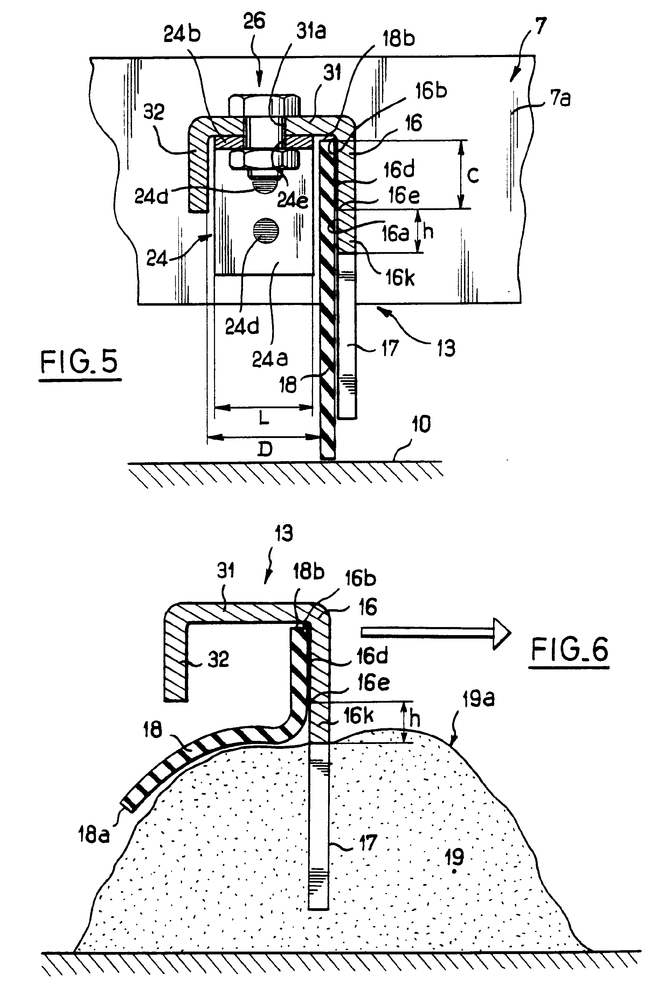

Comme le montre la figure 5, la lame flexible 18 de chaque racleur 13 est collée à la face 16a de la traverse 16 de l'armature 14 dans une région de collage 16d qui est une bande continue s'étendant longitudinalement d'une extrémité à l'autre de la traverse 16, et latéralement entre le bord supérieur 18b de la lame 18 et un bord inférieur 16e de la région 16d. La largeur C de la bande de collage 16d est de l'ordre de 10 mm.

Comme le montre encore la figure 5, la région de collage 16d est située à une distance supérieure à h, cette distance étant mesurée vers le haut de l'extrémité des dents 17 qui est raccordée à la traverse 16. La lame 18 est libre par rapport à l'armature 14 en dessous du bord inférieur 16e de la région de collage 16d, c'est-à-dire au-dessous de ladite distance h, ainsi qu'au niveau des dents 17. Autrement dit, la traverse porteuse 16 forme entre le bord inférieur 16e de la région de collage 16d et les dents 17 une jupe 16k qui, comme le montre la figure 6, abrite la lame flexible sur une certaine ditance en dessous du collage pour éviter que le franchissement d'un fort monticule 19a de matière 19 ne conduise à une cassure de la lame 18 à la limite inférieure 16e du collage 16d.

Le long du bord supérieur 16b de la face 16a, la traverse 16 se raccorde à une aile raidisseuse 31 qui s'étend perpendiculairement à la face 16a, donc horizontalement en service, au-dessus du bord supérieur 18b de la lame 18. Le long de son bord opposé à la face 16a, l'aile raidisseuse 31 est raccordés à un rebord 32 dirigé vers le sol 10 parallèlement à la face 16a. Les dents 17 et la traverse 16 y compris l'aile 31 et le rebord 32 sont réalisés d'une seule pièce de tôle découpée et pliée.

Comme le montrent les figures 1, 2 et 5, les racleurs 13 sont fixés par leurs extrémités aux longerons 7 au moyen d'équerres 24 soudées à la face des ailes 7a des longerons 7 tournée vers l'intérieur du cadre. Chaque équerre 24 comprend une aile verticale 24a soudée par points 24d à l'aile 7a du longeron 7 adjacent, et une aile 24b qui constitue une console solidaire du longeron sur laquelle est posée l'aile raidisseuse 31. Un boulon 26 qui traverse un trou 31a de l'aile 31 et un trou 24e de l'aile 24b serre l'aile 31 contre l'aile 24b.

La largeur L de l'équerre 24 est inférieure à la distance libre D entre la lame 18 et le rebord 32 de sorte que la présence de l'équerre 24 n'empêche pas la lame 18 de s'étendre presque jusqu'au contact de l'aile 7a des longerons 7 (figure 2) et presque jusqu'au contact avec la face inférieure à l'aile 31 (figure 5).

Grâce à l'aile raidisseuse 31 et au rebord 32, l'armature 14 a une très bonne rigidité à l'égard de la flexion et de la torsion, malgré sa grande légèreté. Ainsi la fixation par un seul boulon 26 d'axe vertical à chaque extrémité s'est avérée suffisante.

Le racleur selon l'invention est exempt de soudures, ce qui permet de le réaliser en tôle galvanisée résitant à la corrosion et de se dispenser d'une opération de peinture.

Les dimensions d'un racleur selon l'invention peuvent être les suivantes :
- longueur : jusqu'à 1,50 m et plus ;
- hauteur hors tout entre le bord inférieur 18a de la lèvre 18 et la face supérieure de l'aile 31 : 60 mm ;
- longueur des dents 17 : 35 mm ;
- épaisseur de la tôle de l'armature 14 : 3 mm ;
- épaisseur de la lame flexible 18 : 2 mm ;
- distance entre l'extrémité libre des dents 17 et le bord inférieur 18a de la lame flexible 18 : 7,5 mm (3 à 4 fois l'épaisseur de la lame 18) ;
- hauteur h : 7,5 mm (3 à 4 fois l'épaisseur de la lame 18) ;
- matière de la lame flexible : caoutchouc ayant les caractéristiques suivantes :
   . dureté Shore : 40
   . densité : 1
   . contrainte de rupture en traction : 14 MPa ;
   . allongement : 650 % ;
   . température admissible - 50°C à + 70°C.
- colle utilisée : colle cyanoacrylate utilisant comme monomère de base l'éthyle cyanoacrylate ; en particulier la colle disponible dans le commerce sous la marque LOCTITE 380.

Le racleur selon l'invention est moins encombrant en hauteur que le racleur connu, ses dents sont plus longues, il a une bonne résistance à la flexion grâce à l'aile raidisseuse 31 et au rebord 32, et sa liaison entre armature et lame flexible est améliorée. Cette liaison est en outre plus économique à réaliser car elle dispense de multiples perçages et boulonnages. La fixation amovible entre les racleurs et les longerons simplifie la maintenance. La bonne rigidité favorise la bonne tenue du collage.

## Revendications

1. Racleur destiné à être monté entre deux longerons (7) d'un châssis de raclage à mouvement alternatif (6), comprenant une armature (14) en tôle métallique du type peigne à dents (17) dirigées vers le bas, et une lame racleuse (18) flexible fixée contre une face (16a) d'une traverse (16) de l'armature, au-dessus d'une extrémité des dents (17) qui est raccordée à la traverse, la lame racleuse flexible (18) s'étendant vers le bas en couvrant lesdites dents (17), caractérisé en ce que la lame flexible (18) est collée à ladite face (16a) de l'armature (14).

2. Racleur selon la revendication 1, caractérisé en ce que la lame flexible est collée à ladite face de la traverse de l'armature dans une région (16d) située à une distance (h) de ladite extrémité des dents (17) qui est raccordée à la traverse (16), la lame flexible étant libre relativement à l'armature (14) le long de ladite distance (h) et le long des dents (17).

3. Racleur selon l'une des revendications 1 ou 2, caractérisé en ce que la lame est reliée à ladite face (16a) de la traverse par une bande de colle (16d) ayant une largeur C de l'ordre de 10 mm et une longueur sensiblement égale à celle de la traverse (16).

4. Racleur selon l'une des revendications 1 à 3, caractérisé en ce qu'un bord supérieur (18b) de la lame (18) est voisin d'un bord supérieur (16b) de ladite face (16a) de la traverse (16).

5. Racleur selon l'une des revendications 1 à 4, caractérisé en ce que la lame (18) est en élastomère et collée à ladite face de la traverse au moyen d'une colle cyanoacrylate, de préférence une colle utilisant comme monomère de base un éthyle cyanoacrylate, la traverse (16) étant métallique.

6. Racleur selon l'une des revendications 1 à 5, caractérisé en ce que la lame flexible (18) est en caoutchouc.

7. Racleur selon l'une des revendications 1 à 6, caractérisé en ce que, le long d'un bord opposé aux dents (17), la traverse (16) comporte une aile raidisseuse (31) formant un angle par rapport à ladite face (16a) de la traverse.

8. Racleur selon la revendication 7, caractérisé en ce que l'aile raidisseuse (31) s'étend au-dessus d'un bord (18b) de la lame ((18) adjacent à ladite face (16a) de la traverse.

9. Racleur selon l'une des revendications 7 ou 8, caractérisé en ce que l'aile (31) comporte à l'opposé de la face de fixation (16a) un rebord (32) dirigé vers le bas.

10. Racleur selon l'une des revendications 7 à 9, caractérisé en ce que l'aile raidisseuse (31) comporte à chaque extrémité de l'armature (14) des moyens (31a) de fixation à des longerons (7) d'un châssis de raclage.

11. Châssis de raclage comprenant deux longerons paralléles (7) entre lesquels s'étendent transversalement des racleurs (13) conformes à la revendication 10, caractérisé en ce que les longerons (7) comportent pour chaque racleur une console (24b) sur laquelle repose l'aile raidisseuse (31), et en ce qu'un boulon (26) traverse la console (24b) et l'aile raidisseuse (31) pour fixer le râcleur (13) au longeron (7).

## Patentansprüche

1. Abstreicher, der zwischen zwei Längsträgern (7) eines Abstreicherchassis, zur alternierenden Bewegung (6) montierbar ist, mit einer Armatur (14) aus einem metallischen kammartigen Blech mit nach unten gerichteten zähnen (17) und mit einem flexiblen Abstreichblatt (16), das mit einer Fläche (16a) einer Traverse (18) der Armatur oberhalb eines mit der Traverse verbundenen Endes der Zähne (17) verbunden ist und sich unter Abdeckung der Zähne (17) nach unten erstreckt, **dadurch gekennzeichnet,** **daß** das flexible Abstreichblatt (18) an die genannte Fläche (16a) der Armatur (14) geklebt ist.

2. Abstreicher nach Anspruch 1, dadurch gekennzeichnet, daß das flexible Blatt in einem Abschnitt (16d) an die genannte Fläche der Traverse der Armatur geklebt ist, der in einem Abstand (h) von dem genannten, mit der Traverse (16) verbundenen Ende der Zähne (17) angeordnet ist, wobei das flexible Blatt im Bezug auf die Armatur (14) über den genannten Abstand (h) und die Länge der Zähne (17) frei ist.

3. Abstreicher nach Anspruch 1 oder 2, dadurch gekennzeichnet, daß das Blatt an der genannten Fläche (16a) der Traverse mit einem Klebeband (16d) befestigt ist, das eine Höhe in der Größenordnung von 10 mm und eine im wesentlichen mit der Länge der Armatur (16) übereinstimmende Länge aufweist.

4. Abstreicher nach einem der Ansprüche 1 bis 3, dadurch gekennzeichnet, daß ein oberer Rand (18b) des Blattes (18) einem oberen Rand (16b) der genannten Fläche (16a) der Traverse (16) benachbart ist.

5. Abstreicher nach einem der Ansprüche 1 bis 4, dadurch gekennzeichnet, daß das Blatt (18) aus einem Elastomer besteht und mit einem Cyanoacrylat-Kleber, vorzugsweise einem Kleber mit Ethyl-Cyanoacrylat als Basismonomer, auf die aus Metall gebildete Traverse (16) geklebt ist.

6. Abstreicher nach einem der Ansprüche 1 bis 5, dadurch gekennzeichnet, daß das flexible Blatt (18) aus Kautschuk besteht.

7. Abstreicher nach einem der Ansprüche 1 bis 6, dadurch gekennzeichnet, daß die Traverse (16) entlang einem den Zähnen (17) gegenüberliegenden Rand einen Versteifungsflügel (31) aufweist, der mit der genannten Fläche (16a) der Traverse einen Winkel bildet.

8. Abstreicher nach Anspruch 7, dadurch gekennzeichnet, daß sich der Versteifungsflügel (31) oberhalb eines Randes (18b) des der genannten Fläche (16a) der Traverse benachbarten Blatts (18) erstreckt.

9. Abstreicher nach Anspruch 7 oder 8, dadurch gekennzeichnet, daß der Flügel (31) der Befestigungsfläche (16a) gegenüberliegend einen nach unten gerichteten Rand (32) aufweist.

10. Abstreicher nach einem der Ansprüche 7 bis 9, dadurch gekennzeichnet, daß der Versteifungsflügel (31) auf jeder Seite der Armatur (14) Befestigungsmittel (31a) zur Befestigung an den Längsträgern (7) des Abstreicherchassis aufweist.

11. Abstreicherchassis mit zwei parallelen Längsträgern (7), zwischen denen sich Transversalabatreicher (13) nach Anspruch 10 erstrecken, dadurch gekenzeichnet, daß die Längsträger (7) für jeden Abstreicher eine Konsole (24b) aufweisen, auf der der Verstärkungsflügel (31) lagert, und daß ein Bolzen (26) durch die Konsole (24b) und den Versteifungsflügel (31) zur Befestigung des Abstreichers (13) am Längsträger (7) hindurchragt.

## Claims

1. A scraper for fitting between two longitudinal members (7) of a reciprocating scraping frame (6), comprising a comb-type sheet-metal skeleton (14) having downwardly extending teeth (17), and a flexible scraper strip (18) secured against a surface (16a) of a cross-member (16) of the skeleton above one end of the teeth (17) which is connected to the cross-member, the flexible scraper strip (18) extending downwards and covering the teeth (17), characterised in that the flexible strip (18) is stuck to the aforementioned surface (16a) of the skeleton (14).

2. A scraper according to claim 1, characterised in that the flexible strip is stuck to the aforementioned surface of the cross-member of the skeleton in a region (16d) situated at a distance (h) from the aforementioned end of the teeth (17) connected to the cross-member (16), the flexible strip being free relative to the skeleton (14) along the aforementioned distance (h) and along the teeth (17).

3. A scraper according to claim 1 or 2, characterised in that the strip is connected to the aforementioned surface (16a) of the cross-member by a strip of adhesive (16d) having a width (C) of the order of 10 mm and a length substantially equal to that of the cross-member (16).

4. A scraper according to any of claims 1 to 3, characterised in that the upper edge (18b) of the strip (18) is near an upper edge (16b) of the aforementioned surface (16a) of the cross-member (16).

5. A scraper according to any of claims 1 to 4, characterised in that the strip (18) is of elastomer and stuck to the aforementioned surface of the cross-member by a cyanoacrylate adhesive, preferably an adhesive in which the monomer base is an ethyl cyanoacrylate, the cross-member (16) being made of metal.

6. A scraper according to any of claims 1 to 5, characterised in that the flexible strip (18) is made of rubber.

7. A scraper according to any of claims 1 to 6, characterised in that, along an edge remote from the teeth (17), the cross-member (16) has a stiffening rib (31) at an angle to the aforementioned surface (16a) of the cross-member.

8. A scraper according to claim 7, characterised in that the stiffening rib (31) extends above an edge (18b) of the strip (18) adjacent the aforementioned surface (16a) of the cross-member.

9. A scraper according to claim 7 or 8, characterised in that the rib (31), opposite the securing surface (16a), has a downwardly extending flange (32).

10. A scraper according to any of claims 7 to 9, characterised in that, at each end of the skeleton (14), the stiffening rib (31) has means (31a) for securing to longitudinal members (7) of a scraping frame.

11. A scraping frame comprising two parallel longitudinal members (7), between which scrapers (13) according to claim 10 extend transversely, characterised in that in that in the case of each scraper, the longitudinal members (7) comprise a bracket (24b) bearing the stiffening rib (31), and a bolt (26) extends through the bracket (24b) and the stiffening rib (31) in order to secure the scraper (13) to the longitudinal member (7).
